# EUROPÄISCHE PATENTSCHRIFT

(11) **EP 2 661 566 B1**
(45) Veröffentlichungstag und Bekanntmachung des Hinweises auf die Patenterteilung: **14.10.2015**
(21) Anmeldenummer: 12734921.5
(22) Anmeldetag: 09.07.2012
(51) Int. Cl.: F16F 1/38

(54) **LAGEREINHEIT FÜR NUTZFAHRZEUGE**
BEARING UNIT FOR COMMERCIAL VEHICLES
UNITÉ PALIER POUR VÉHICULES UTILITAIRES

(30) Priorität: 14.07.2011 DE 102011079163
(43) Veröffentlichungstag der Anmeldung: 13.11.2013
(73) Patentinhaber: SAF-HOLLAND GmbH, 63856 Bessenbach (DE)
(72) Erfinder: SPIELMANN, Rolf, 97877 Wertheim (DE)
(74) Vertreter: Müller Schupfner & Partner Patent- und Rechtsanwaltspartnerschaft mbB
(86) Internationale Anmeldenummer: PCT/EP2012/063357
(87) Internationale Veröffentlichungsnummer: WO 2013/007672

(56) Entgegenhaltungen:
- WO-A1-94/13967
- DE-B- 1 128 307
- FR-A1- 2 534 999
- FR-A1- 2 574 886
- GB-A- 2 021 707
- US-A1- 2006 061 023

## Beschreibung

Die vorliegende Erfindung betrifft eine Lagereinheit insbesondere für Achssysteme von Nutzfahrzeugen gemäß dem Oberbegriff des Anspruchs 1.

Lagereinheiten der in der Rede stehenden Art sind aus dem Stand der Technik hinlänglich bekannt. Es wird dabei insbesondere der Führungslenker der Achsaufhängung eines Nutzfahrzeuges mittels eines elastisch verformbaren Lagerelements am Fahrzeugrahmen festgelegt. Bisher wurden elastische Lagerelemente in sogenanntes Lageraugen am Führungslenker eingepresst, wobei derart hohe Kräfte notwendig sind, dass der Einsatz eines, beispielsweise hydraulisch betriebenen, Werkzeuges nötig ist. Weiterhin besteht bei Aufbringen der hohen Kräfte auf das Lagerelement die Gefahr einer Beschädigung des elastisch verformbaren Materials des Lagerelements. Es ergibt sich bei kreisrunden Lageraugen und darin eingepressten Lagerelementen darüber hinaus das Problem, dass sich Lagerauge und Lagerelement gegeneinander verdrehen können. Die Folge kann eine Schädigung des Lagerelements durch Überhitzung und ein gesteigerter Verschleiß durch Abrasion sein.

Die FR2574886 zeigt eine Lagereinheit mit einem Halteelement einem Hülsenelement und einem Lagerelement, wobei das Halteelement einen ersten Eingriffsbereich zum Festlegen des Lagerelements und einen zweiten Eingriffsbereich aufweist, um den ersten Eingriffsbereich kraftschlüssig am Lagerelement festzulegen.

Es ist also Aufgabe der vorliegenden Erfindung eine Lagereinheit, insbesondere für Achssysteme von Nutzfahrzeugen bereitzustellen, die auf einfache Weise hergestellt bzw. montiert werden kann und Überhitzung bzw. abrasiven Verschleiß des Lagerelements vermeidet.

Diese Aufgabe wird gelöst mit einer Lagereinheit gemäß dem Oberbegriff des Anspruchs 1. Weitere Vorteile und Merkmale der Erfindung ergeben sich aus den Unteransprüchen sowie der Beschreibung und den beigefügten Figuren. Erfindungsgemäß umfasst die Lagereinheit ein Halteelement, ein Hülsenelement und ein Lagerelement, wobei das Halteelement einen ersten Eingriffsbereich aufweist, der ausgelegt ist, das Lagerelement in einer Ebene E im Wesentlichen zu umschließen, wobei das Lagerelement eine quer zur Ebene E gerichtete erste Aussparung aufweist, in der das Hülsenelement angeordnet ist, wobei das Hülsenelement über das Lagerelement federnd in der Ebene E relativ zum Halteelement gelagert ist, wobei das Halteelement einen zweiten Eingriffsbereich aufweist, in dem ein Fixierelement eingreift, um den ersten Eingriffsbereich kraftschlüssig am Lagerelement festzulegen und wobei der erste Eingriffs- bzw. Befestigungsbereich und/oder das Lagerelement eine nicht kreisrunde Form aufweisen, so dass eine Verdrehbewegung des Lagerelements relativ zum Halteelement verhindert ist. Bevorzugt kann das Halteelement der Befestigungsbereich, bzw. ein Befestigungsbereich des Führungslenkers der Achsaufhängung des Nutzfahrzeuges sein. Das Halteelement weist einen ersten Eingriffsbereich auf, der bevorzugt derart geformt ist, dass ein Lagerelement im ersten Eingriffsbereich angeordnet und festgelegt werden kann. Der erste Eingriffsbereich bildet bevorzugt ein Lagerauge und kann bevorzugt sowohl in einen Montagezustand, als auch in einen Betriebszustand versetzt werden. Der Montagezustand ist dadurch gekennzeichnet, dass der erste Eingriffsbereich derart geweitet ist, dass das Lagerelement in den vom ersten Eingriffsbereich umschlossenen Raum eingesetzt werden kann, ohne dass dazu eine Verformung oder Einpressung des Lagerelements benötigt wird. Vom Montagezustand kann der erste Eingriffsbereich durch elastische Verformung des Halteelements in den Betriebszustand versetzt werden, wobei das im ersten Eingriffsbereich angeordnete Lagerelement kraftschlüssig am ersten Eingriffsbereich festgelegt wird. Mit anderen Worten wird der Querschnitt des vom ersten Eingriffsbereich umschlossenen Raumes entlang der Ebene E derart verkleinert, dass der erste Eingriffsbereich auf das Lagerelement drückt und so eine kraftschlüssige Verbindung zwischen ersten Eingriffsbereich und Lagerelement entsteht. Um den ersten Eingriffsbereich vom Montagezustand in den Betriebszustand zu versetzen, weist das Halteelement einen, mit dem ersten Eingriffsbereich operativ verbunden, zweiten Eingriffsbereich auf, um bevorzugt eine Kraft auf den ersten Eingriffsbereich auszuüben, welche den ersten Eingriffsbereich elastisch verformt. Die Kraft, die vom zweiten Eingriffsbereich auf den ersten Eingriffsbereich übertragen wird, bringt ein Fixierelement auf den zweiten Eingriffsbereich auf. Bevorzugt ist das Fixierelement eine Schraube-Mutter-Verbindung, welche eine Zugkraft aufbringen kann, die über den zweiten Eingriffsbereich auf den ersten Eingriffsbereich übertragen wird, den ersten Eingriffsbereich derart verformt, dass sich sein Querschnitt bzw. der Querschnitt vom ersten Eingriffsbereich umschlossenen Raumes in der Ebene E verkleinert. Das Lagerelement weist erfindungsgemäß eine quer zur Ebene E gerichtete erste Aussparung auf, in welcher ein Hülsenelement angeordnet ist. Das Hülsenelement ist bevorzugt eine Buchse, besonders bevorzugt aus metallischem Material gebildet und weist eine Aussparung auf, welche zur Aufnahme eines bevorzugten Lagerzapfens bzw. Bolzens dient, wobei der Bolzen bzw. der Zapfen das Hülsenelement gegen Verlagerung in der Ebene E relativ zum Fahrzeugrahmen des Nutzfahrzeuges sichert. Erfindungsgemäß weist der erste Befestigungsbereich und/oder das Lagerelement eine nicht kreisrunde Form auf, so dass eine Verdrehbewegung des Lageelements relativ zum Halteelement verhindert ist. Die nicht kreisrunde Form ist dabei bevorzugt die Form des Querschnittes in der Ebene E des Lagerelements und des vom ersten Befestigungsbereich umschlossenen Raumes. Weiterhin ist es bevorzugt, dass die nicht kreisrunde Form im Betriebszustand, also dem Zustand, in dem der erste Eingriffsbereich am Lagerelement festgelegt ist, vorliegt, wobei der erste Befestigungsbereich oder das Lagerelement bereits vor dem Einbau, d. h. im Montagezustand eine nicht kreisrunde Form bzw. einen nicht kreisrunden Querschnitt aufweisen können. Die nicht kreisrunde Form dient in erster Linie dazu, eine Verdrehbewegung des Lagerelements relativ zum Halteelement bzw. relativ zum ersten Befestigungsbereich des Halteelements zu verhindern, um insbesondere übermäßigen Verschleiß, beispielsweise durch Abrasion, des Lagerelements zu verhindern bzw. zu vermindern.

In einer bevorzugten Ausführungsform ist die erste Aussparung am Lagerelement derart ausgebildet, dass die Federkennlinie des Lagerelements richtungsabhängig in der Ebene ist. Als Federkennlinie wird allgemein der Zusammenhang zwischen der an die Feder bzw. das elastische Material angelegten Kraft und der daraus resultierenden Weglänge der Verformung des elastischen Materials definiert. Dabei verläuft die Federkennlinie umso steiler, je höher die zur Erreichung einer bestimmten Verformung des Federmaterials notwendige Kraft ist. Es kann im Falle der vorliegenden Erfindung beispielsweise bevorzugt sein, dass das Lagerelement in vertikaler Richtung Federeigenschaften aufweist, die sich von den Federeigenschaften in horizontaler Richtung unterscheiden, wobei zur Erreichung dieser unterschiedlichen Federeigenschaften bzw. der in verschiedene Richtung unterschiedlichen Federkennlinie des Lagerelements, die Materialstärke des elastischen Materials in der Ebene E, ausgehend von der ersten Aussparung des Lagerelements, in verschiedenen Richtungen verschiedene Werte annehmen kann. Mit anderen Worten ist die Aussparung bzw. die erste Aussparung des Lagerelements bevorzugt exzentrisch angeordnet, wobei eine auf das Hülsenelement übertragene Kraft in jeweils verschiedenen Richtungen entlang der Ebene E verschieden starke Verformungen des Lagerelements auslöst und somit das Hülsenelement in verschiedenen Richtungen entlang der Ebene E verschieden stark bzw. verschieden hart gefedert ist. Bevorzugt kann die erste Aussparung des Lagerelements neben einem Bereich, in dem das Hülsenelement gelagert ist, auch weitere Bereiche aufweisen, in deren Richtung die Federkennlinie des Lagerelements abgeflacht bzw. das Lagerelement eine weichere Federeigenschaft aufweist. Mit anderen Worten, kann durch eine lokale Schwächung des Materials des Lagerelements bzw. durch eine Verringerung des Querschnittes, welcher senkrecht zur abzufedernden Kraft steht, die Federeigenschaften des Lagerelements dahingehend beeinflusst werden, dass bei gleicher Federkraft ein höherer Federweg erreicht wird und somit eine weichere Federeigenschaft des Lagerelements gegeben ist. So kann die erste Aussparung des Lagerelements beispielsweise lamellenartig geformte Bereiche aufweisen, wobei das Lagerelement insbesondere quer zu den Lamellen eine weichere Federeigenschaft zeigt als quer zu einem vergleichbaren, als Vollkörper ausgebildeten Lagerelement.

Von Vorteil kann es sein, wenn das Lagerelement zweite Aussparungen und/oder Rücksprünge aufweist, um die Federkennlinie des Lagerelements in der Form der ersten Aussparung zur/zum zweiten Aussparung/Rücksprung verlaufenden Richtung flacher als in der quer zu dieser verlaufenden Richtung zu gestalten. Zusätzlich zur ersten Aussparung, in welcher das Hülsenelement angeordnet ist, kann es also bevorzugt sein, zweite Aussparungen bzw. Rücksprünge in das Lagerelement einzubringen. Diese Aussparungen und/oder Rücksprünge bewirken jeweils eine Querschnittsverengung des Querschnitts des Lagerelements, wobei bei Anlegen einer Kraft an das Lagerelement ein größerer Federweg erreicht wird als bei Anlagen der gleichen Kraft an das Lagerelement ohne zweite Aussparung erreicht werden würde. Verursacht wird dieser Effekt dadurch, dass durch die Querschnittsverengung bei gleicher Kraft in dem verkleinerten Querschnitt eine höhere Spannung auftritt als in einem vergleichsweise größeren Querschnitt, wobei bei gleichen Materialparametern das Lagerelement mit dem geringen Querschnitt quer zur Kraftrichtung eine größere Verformung erfährt als das Lagerelement mit dem größeren Querschnitt. Durch gezieltes Einbringen zweiter Aussparungen in bestimmten Richtungen, ausgehend von der ersten Aussparung, kann eine bestimmte Federcharakteristik bzw. Federkennlinie für die gefederte Lagerung des Hülsenelements in der ersten Aussparung des Lagerelements eingestellt werden. Bevorzugt ist es, dass die Federcharakteristik insbesondere für Kräfte, die in der Ebene E, also in der bevorzugt quer zur ersten Aussparung liegenden Ebene eingestellt wird.

Weiterhin bevorzugt ist es, dass das Lagerelement formschlüssig am ersten Eingriffsbereich des Halteelements gegen Verlagerung quer zur Ebene E relativ zum Halteelement gesichert ist. Da der erste Haltebereich das Lagerelement in der Ebene E umschließt und in dieser Ebene auch ein Kraftschluss zwischen erstem Eingriffsbereich und Lagerelement hergestellt ist, ist das Lagerelement in der Ebene E bzw. gegen Verlagerung längs der Ebene E relativ zum ersten Eingriffsbereich und damit relativ zum Halteelement gesichert. Um eine Verlagerung des Lagerelements quer zur Ebene E relativ zum ersten Eingriffsbereich des Halteelements zu verhindern, ist eine formschlüssige Verbindung vom ersten Eingriffsbereich und dem Lagerelement vorgesehen. Bevorzugt ist dabei insbesondere, dass der erste Eingriffsbereich quer zur Ebene E Hinterschneidungen aufweist, die das Lagerelement gegen Verlagerung quer zur Ebene E relativ zum Halteelement sichern.

Insbesondere bevorzugt ist, dass das Lagerelement an seiner quer zur Ebene E gerichteten Außenfläche eine ballige Form aufweist, die zumindest bereichsweise formschlüssig in einer konkaven Form des ersten Eingriffsbereiches eingreift. Bevorzugt ist dabei die nach innen, also zum Lagerelement hin gerichtete Fläche des ersten Eingriffsbereiches konkav geformt und greift zumindest bereichsweise in die ballige Form der Außenfläche des Lagerelements ein. Auf diese Weise wird das Lagerelement gegen Verlagerung quer zur Ebene E relativ zum ersten Eingriffsbereich des Halteelements gesichert. Alternativ zur konkaven Form kann der erste Eingriffsbereich auch eine rechteckige Form oder eine Kreisform an seiner Innenseite aufweisen, wobei das Lagerelement an seiner Außenseite eine jeweils zumindest bereichsweise korrespondierende Form besitzt.

In einer bevorzugten Ausführungsform steht der mittlere Radius des Lagerelements parallel zur Ebene E zum mittleren Krümmungsradius der balligen Form des Lagerelements quer zur Ebene E in einem Verhältnis von 0,2 bis 2, bevorzugt 0, 5 bis 1,7 und besonders bevorzugt von ca. 0,9. Bevorzugt kann mit der Wahl eines bestimmten Verhältnisses des mittleren Radius des Lagerelements zum mittleren Krümmungsradius der balligen Form des Lagerelements die Höhe der Hinterschneidung, welche das Lagerelement gegen Verlagerung quer zur Ebene E relativ zum Halteelement sichert, eingestellt werden. Als mittlerer Radius des Lagerelements wird dabei die mittlere Erstreckung des Lagerelements in der Ebene E bei einer nicht kreisrunden Form des Lagerelements in der Ebene E bezeichnet. Als mittlerer Krümmungsradius der balligen Form des Lagerelements wird dabei ein mittlerer bzw. durchschnittlicher Krümmungsradius dieser balligen Form des Lagerelements bezeichnet. Vergrößert man das Verhältnis der beiden Radien zueinander, so wird bei gleichbleibendem, mittlerem Radius des Lagerelements parallel zur Ebene E der mittlere Krümmungsradius der balligen Form des Lagerelements kleiner und somit nähert sich die Krümmung der balligen Form des Lagerelements mehr und mehr einer Halbkreisform an. Durch Vergrößerung des Radienverhältnisses wird bevorzugt die Überlappungslänge der Hinterschneidung des Eingriffsbereichs des Halteelements, welcher bevorzugt zumindest bereichsweise kongruent zur Geometrie der balligen Form ist, vergrößert. Alternativ bevorzugt kann die Krümmung der balligen Form des Lagerelements auch durch ein Verhältnis des Krümmungsradius zur Dicke des Lagerelements, also zu dessen Erstreckung quer zur Ebene E definiert sein, wobei das Verhältnis des Krümmungsradius des Lagerelements zur Dicke des Lagerelements quer zur Ebene E bevorzugt in einem Bereich von 0,5 bis 2 liegt. Dabei stellt ein Verhältnis von 0,5 des Radius der Krümmung des Lagerelements zur Dicke des Lagerelements jeweils das Minimum dar, in dem das Lagerelement eine genau halbkreisförmige Krümmung aufweist.

Von Vorteil ist es, wenn das Lagerelement einen nasenförmigen Vorsprung aufweist, der sich in Richtung des Übergangsbereiches zwischen erstem und zweitem Eingriffsbereich des Halteelements erstreckt, um das Lagerelement gegen Verdrehung in der Ebene E relativ zum Halteelement zu sichern. Der nasenförmige Vorsprung des Lagerelements ist dabei bevorzugt eine exzentrische Ausformung des Lagerelements, die in den Bereich, in dem der erste Eingriffsbereich vom zweiten Eingriffsbereich gegen das Lagerelement gehalten wird, hineinragt und aufgrund der exzentrischen Form eine Verdrehung des Lagerelements relativ zum ersten Eingriffsbereich des Halteelements bzw. relativ zum Halteelement verhindert.

In bevorzugter Ausführungsform ist das Lagerelement durch die im ersten Eingriffsbereich übertragene Kraft derart verformt, dass der Querschnitt des Lagerelements in der Ebene E tropfenförmig ausgebildet ist. Bevorzugt für eine nicht kreisförmige Form des Lagerelements ist also eine Tropfenform, wobei das spitz zulaufende Ende der Tropfenform bevorzugt der nasenförmige Vorsprung ist, welcher das Lagerelement gegen Verdrehung relativ zum Halteelement in der Ebene E sichert. Das Lagerelement kann dabei sowohl durch die vom ersten Eingriffsbereich übertragene Kraft verformt sein als auch schon vor dem Einbau in den ersten Eingriffsbereich bereits eine tropfenförmige Form aufweisen.

In einer ferner bevorzugten Ausführungsform ist der erste Eingriffsbereich durch die vom Fixierelement aufgebrachte und vom zweiten Eingriffsbereich übertragene Kraft elastisch verformt, so dass sich der erste Eingriffsbereich beim Lösen des Fixierelements in eine Position zurückstellt, in der das Lagerelement nicht am Halteelement festgelegt ist. Bevorzugt ist also, dass der erste Eingriffsbereich des Halteelements bei Entfernen der Fixiereinheit und damit entfallen der Kraft, welche auf den ersten Eingriffsbereich in der Ebene E wirkt, in eine Position zurückstellt, in welcher das Lagerelement nicht am Halteelement festgelegt ist. Mit anderen Worten bedeutet dies, dass der erste Eingriffsbereich des Halteelements eine Ruhlage aufweist, in welcher der von ihm in der Ebene E umschlossene Raum größer als die Erstreckung des Lagerelements in der Ebene E ist, so dass das Lagerelement in die Aussparung bzw. in den umschlossenen Bereich des ersten Eingriffsbereichs ein- und wieder ausgeführt werden kann und der erste Eingriffsbereich nur durch Anlegen einer Kraft, welche den ersten Eingriffsbereich elastisch verformt, in den Betriebszustand versetzt wird, in welchem er das Lagerelement umschließt und eine kraftschlüssige bzw. eine Pressverbindung zwischen erstem Eingriffsbereich und Lagerelement hergestellt ist. Bevorzugt ist im Betriebszustand ein Presssitz zwischen erstem Eingriffsbereich des Halteelements und Lagerelement hergestellt.

Weiterhin bevorzugt ist es, dass die zweiten Aussparungen/Rücksprünge am Lagerelement einer kreisabschnittsförmigen Bahn folgen, die parallel zur Ebene E und konzentrisch zur ersten Aussparung verläuft. Mit anderen Worten sind also bevorzugt sichelförmige Aussparungen und/oder Rücksprünge in das Lagerelement eingebracht, wobei der Mittelpunkt der sichelförmigen bzw. kreisabschnittsförmigen Bahn deckungsgleich zum Mittelpunkt der ersten Aussparung des Lagerelements angeordnet ist. Bei einer nicht kreisförmigen Ausbildung der ersten Aussparung des Lagerelements kann bevorzugt auf den Mittelpunkt der mittleren Kreisbahn oder einer mittleren Kreisbahn der ersten Aussparung des Lagerelements bezogen werden.

In einer besonders bevorzugten Ausführungsform weist das Lagerelement zumindest zwei auf gegenüberliegenden Seiten der ersten Aussparung angeordnete zweite Aussparungen bzw. Rücksprünge auf. Mithilfe zweier gegenüberliegender zweiter Aussparungen bzw. Rücksprünge kann in einer ersten Richtung eine Federcharakteristik eingestellt werden, welche sich deutlich von einer zweiten, zur ersten quer liegenden Richtung unterscheidet, in der keine zweiten Aussparungen bzw. Rücksprünge den Verlauf der Kraftrichtung kreuzen. Das Einbringen zweiter Aussparungen kann besonders dann bevorzugt sein, wenn eine Federcharakteristik in Richtung der ersten zur zweiten Aussparung angestrebt ist, die sich deutlich von der quer dazuliegenden Richtung unterscheiden soll, wobei einer Aussparung bzw. einer quer zur Ebene E durch das gesamte Material des Lagerelements hindurchreichende Aussparung, die größte Materialschwächung darstellt. Insbesondere kann durch das Einbringen zweiter Aussparungen eine nicht-stetige Federkennlinie für das Lagerelement eingestellt werden, da zunächst bei einer beginnenden Verformung die beiden gegenüberliegenden Seiten der zweiten Aussparung aufeinander zu bewegt werden und schließlich aufeinander zum Anliegen kommen, wobei ab dem Moment des Aufeinanderliegendes der beiden Seiten bzw. Flanken der zweiten Aussparung und einer weiteren Verformung die Federkennlinie sprunghaft einen steileren Verlauf nimmt. Das Einbringen zweiter Rücksprünge - d. h. sich nicht durch das gesamte Lagerelement erstreckender bzw. nicht durchgehender Aussparungen oder Löcher - am Lagerelement kann bevorzugt sein, wenn ein stetiger Verlauf der Federkennlinie der Lagerelements bevorzugt ist, wobei die zweiten Rücksprünge das Lagerelement quer zur Ebene E nicht vollständig durchdringen und somit stets ein Materialsteg im Lagerelement verbleibt. Weiterhin kann es bevorzugt sein, eine Kombination aus zweiten Aussparungen und zweiten Rücksprüngen am Lagerelement vorzusehen, wobei in verschiedenen Richtungen stetige oder nicht stetige Federkennlinien für das Lagerelement eingestellt werden können.

In einer bevorzugten Ausführungsform weist der zweite Eingriffsbereich des Halteelements zwei Schenkel auf, die ein Ende aufweisen, das in den ersten Eingriffsbereich übergeht, wobei das Fixierelement die Schenkel aufeinander zu verlagert und/oder in angrenzender Position hält, um den ersten Eingriffsbereich derart zu verformen, dass der kraftschlüssig am Lagerelement festgelegt ist. Die beiden Schenkel des zweiten Eingriffsbereiches des Halteelements dienen dazu, die Kraft, welche vom Fixierelement aufgebracht wird, auf den ersten Eingriffsbereich des Halteelements zu übertragen und diesen derart zu verformen, dass er kraftschlüssig am Lagerelement festgelegt ist. Es kann bevorzugt sein, dass einer der beiden Schenkel eine Fortsetzung des ersten Eingriffsbereiches ist, die abgewinkelt ist und eine Aussparung aufweist, und der zweite Schenkel bevorzugt zwischen dem ersten Eingriffsbereich und einer weiteren Fortsetzung des Führungslenkers angeordnet ist und ebenfalls eine Aussparung aufweist. In den Aussparungen der Schenkel greift bevorzugt das Fixierelement ein, welches besonders bevorzugt eine Schraube ist. Weiterhin bevorzugt kann das Fixierelement auch ein Bolzen mit einer Aussparung für einen quer zur Haupterstreckungsachse des Bolzens liegenden Sicherungsbolzen sein oder eine über die im zusammengepressten oder bzw. aufeinanderliegenden Schenkel gezogene Hülse.

Weitere Vorteile und Merkmale ergeben sich aus der nachfolgenden Beschreibung einer bevorzugten Ausführungsform der erfindungsgemäßen Lagereinheit mit Bezug auf die beigefügten Figuren. Es versteht sich, dass einzelne Merkmale der in den Figuren gezeigten bevorzugten Ausführungsform im Rahmen der Erfindung miteinander kombiniert werden können. Es zeigen:
- Fig. 1 a) bis d): Ansichten bevorzugter Ausführungsformen der erfindungsgemäßen Lagereinheit, und
- Fig. 2 a) und b): Schnittansichten zweier bevorzugter Ausführungsformen der erfindungsgemäßen Lagereinheit.

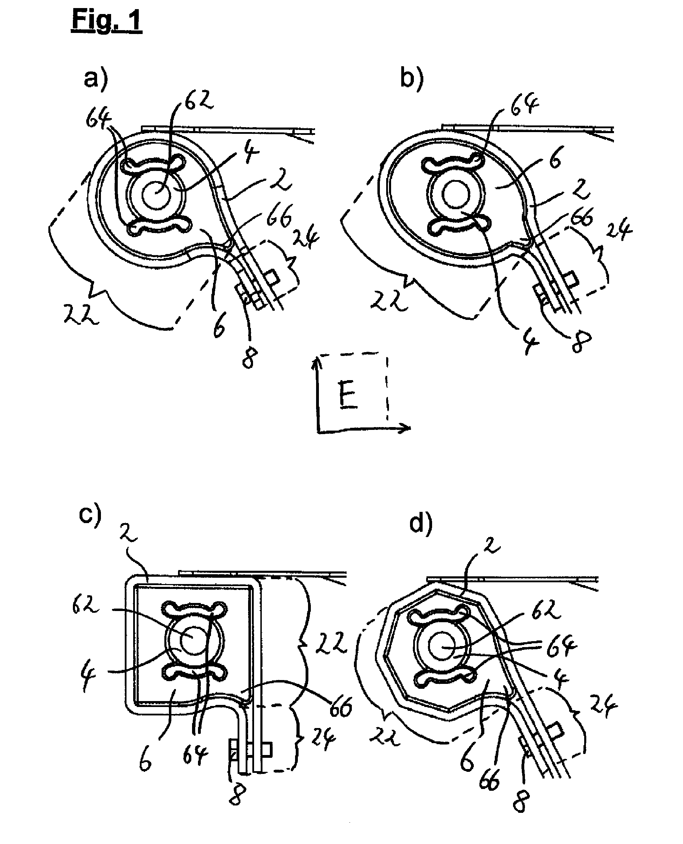

In den Figuren 1 a) bis d) sind vier Seitenansichten, mit Blickrichtung senkrecht zur Ebene E, bevorzugter Ausführungsformen der erfindungsgemäßen Lagereinheit gezeigt. Die Lagereinheit umfasst in den vier Ausführungsbeispielen ein Halteelement 2, ein Hülsenelement 4, ein Lagerelement 6 und ein Fixierelement 8. Das Halteelement 2 weist in jedem der gezeigten Ausführungsbeispiele einen ersten Eingriffsbereich 22 und einen zweiten Eingriffsbereich 24 auf. Der erste Eingriffsbereich 22 ist bevorzugt derart geformt, dass er das Lagerelement 6 in der Ebene E umschließt. Der zweite Eingriffsbereich 24 schließt bevorzugt an die beiden Enden des ersten Eingriffsbereiches 22 an und weist bevorzugt eine Aussparung auf, in der das Fixierelement 8 eingesetzt ist. Das Fixierelement ist bevorzugt eine Schraube, bzw. eine Schraube-Mutter-Verbindung, und übt eine Kraft auf den zweiten Eingriffsbereich 24 aus, der die beiden Schenkel des zweiten Eingriffsbereiches aufeinander zu verlagert, bzw. aneinander gepresst hält. Die vom Fixierelement 8 auf den zweiten Eingriffsbereich 24 übertragene Kraft wird bevorzugt weiter an den ersten Eingriffsbereich 22 übertragen und bewirkt, dass dieser gegen das Lagerelement 6 gepresst wird. Das Lagerelement 6 ist bevorzugt kraftschlüssig am ersten Eingriffsbereich 22 des Haltelements 2 festgelegt. Weiterhin weist das Lagerelement 6 erfindungsgemäß eine erste Aussparung 62 auf, die sich quer zur Ebene E erstreckt und in der das Hülsenelement 4 angeordnet ist. Das Hülsenelement 4 ist bevorzugt in die Aussparung des Lagerelements 6, welches bevorzugt aus Gummi hergestellt ist, einvulkanisiert, bzw. mittels einer stoffschlüssigen Verbindung in der ersten Aussparung festgelegt. Das Hülsenelement 4 ist bevorzugt rohr- bzw. hülsenförmig ausgebildet und weist eine Aussparung auf, in der bevorzugt ein Zapfen oder Bolzen angeordnet werden kann, der das Hülsenelement mit dem Fahrzeugrahmen verbindet und gegen Verlagerung längs der Ebene E sichert. Weiterhin bevorzugt weist das Lagerelement 6 zweite Aussparungen bzw. Rücksprünge 64 auf. Mittels dieser kann bevorzugt eine Federcharakteristik des Lagerelements 6 eingestellt werden, die in verschiedenen Richtungen in der Ebene E verschieden ist. So ist bei der in den Figuren 1 a) bis d) gezeigten Ausführung der zweiten Aussparungen 64 des Lagerelements 6 zu erwarten, dass es in vertikaler Richtung leichter einfedert und die Federkennlinie entsprechend flach ist während in horizontaler Richtung eine härtere Abfederung des Hülsenelements 4 gegenüber dem ersten Eingriffsbereich 22 zu erwarten ist.

Die in den Figuren 1 a) bis d) gezeigten Ausführungsformen unterscheiden sich im Wesentlichen durch die Außenkontur des Lagerelements 6 und die Formung des ersten Eingriffsbereiches 22. In der in Fig. 1 a) gezeigten Ausführungsform weisen das Lagerelement 6 und der erste Eingriffsbereich 22 eine tropfenähnliche Form auf. Bei der in Fig. 1 b) gezeigten Ausführungsform weisen Lagerelement 6 und erster Eingriffsbereich 22 eine elliptische und auch tropfenähnliche Form auf, wobei das Lagerelement 6 in Bezug auf die Abmessungen der ersten und der zweiten Aussparungen 62, 64 merklich verbreitert wurde, um in Querrichtung eine größere Materialdicke und somit veränderte Federungseigenschaften im Vergleich zur Tropfenform in dieser Richtung zu erzielen. Weiterhin kann auch die in Fig. 1 c) gezeigte quaderförmige, oder die in Fig. 1 d) gezeigte vieleckige Ausführung des Lagerelements 6 bzw. des ersten Eingriffsbereiches 22 des Halteelements 2 bevorzugt sein. Die gezeigten vier Ausführungsformen a) bis d) zeichnen sich insbesondere durch eine unterschiedlich starke Absicherung gegen Verdrehung des Lagerelements 6 relativ zum Haltelement 2 aus, wobei die in Fig. 1 a) gezeigte Tropfenform weniger gegen Verdrehung gesichert ist als die stärker exzentrisch ausgebildeten Ausführungsformen b) und c). Allen gezeigten Ausführungsformen gemein ist der nasenförmige Vorsprung 66, der Verdrehbewegung des Lagerelements 6 relativ zum Halteelement 2 verhindert, indem er sich an der Innenseite des ersten Eingriffsbereiches 22 abstützt. Der nasenförmige Vorsprung 66 des Lagerelements 6 wird hierbei vorzugsweise derart gebildet, dass bei einer zusammengebauten Lagereinheit sich dieser zweckmäßigerweise in Richtung des Fixierelements erstreckt. Insbesondere erstreckt sich der nasenförmige Vorsprung 66 entlang der zueinander verlaufenden Bereiche des Halteelements 2 im Bereich des ersten Eingriffsbereichs 22, wobei diese zueinander verlaufenden Bereiche in den zweiten Eingriffsbereich 24 übergehen.

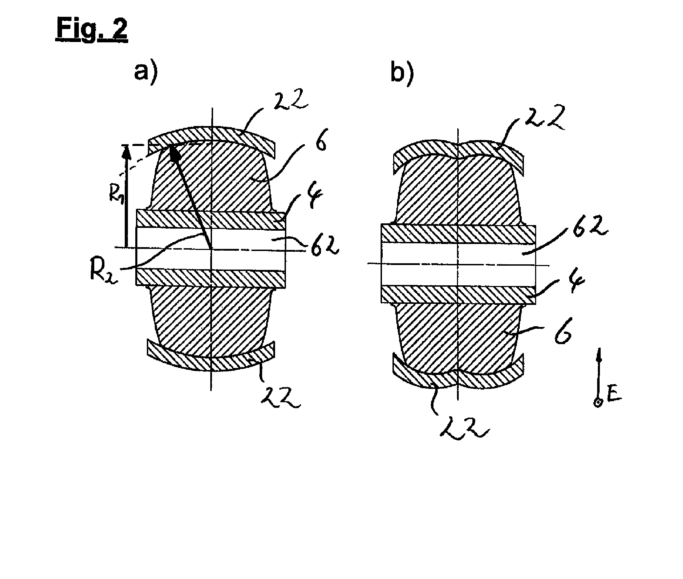

Bei den in Fig. 2 a) und b) gezeigten, bevorzugten Ausführungsformen weist das Lagerelement 6 an seiner Außenfläche eine ballige Form auf. Erkennbar sind deutlich die aus der geschnittenen Ansicht entstehenden konvexen Kanten, die das Lagerelement 6 aufweist und die dazu zumindest bereichsweise korrespondierende Innenfläche des ersten Eingriffsbereiches 22, die in der Schnittansicht bevorzugt eine konkave Kante aufweist. Die Innenfläche des ersten Eingriffsbereiches 22 bildet quer zur Ebene E an beiden Seiten des Lagerelements 6 je eine Hinterschneidung. Mittels dieser Hinterschneidungen wird das Lagerelement 6 gegen seitliches Herausgleiten aus dem Halteelement 2, bzw. dem ersten Eingriffsbereich 22, gesichert. Mit anderen Worten ist das Lagerelement 6 formschlüssig am ersten Eingriffsbereich 22 quer zur Ebene E festgelegt. Die ballig geformte Außenfläche des Lagerelements 6 weist dabei einen Krümmungsradius R₂ auf, welcher in einem Verhältnis zum mittleren Radius R₁ des Lagerelements 6 von bevorzugt 0,2 bis 2 ausgelegt ist. Insbesondere bevorzugt ist das Verhältnis von R₁ zu R₂ ca. 0,5 bis 1,7. Wie in Fig. 2 a) gezeigt, weist das Lagerelement 6 bevorzugt eine einfach ballige Form auf, die in einer einfach konvexen Form des ersten Eingriffsbereiches 22 eingreift. Ferner kann, wie in Fig. 2 b) gezeigt, eine zweifach ballige Ausformung des Lagerelements 6, die mit einer zweifach konkaven Form des ersten Eingriffsbereiches 22 kooperiert, bevorzugt sein.

### Bezugszeichenliste

- 2: - Halteelement
- 4: - Hülsenelement
- 6: - Lagerelement
- 8: - Fixierelement
- 22: - erster Eingriffsbereich
- 24: - zweiter Eingriffsbereich
- 62: - erste Aussparung
- 64: - zweite Aussparung
- 66: - nasenförmiger Vorsprung
- R₁: - mittlerer Radius des Lagerelements
- R₂: - mittlerer Krümmungsradius

## Patentansprüche

1. Lagereinheit, insbesondere für Achssysteme von Nutzfahrzeugen, umfassend ein Halteelement (2), ein Hülsenelement (4) und ein Lagerelement (6), wobei das Halteelement (2) einen ersten Eingriffsbereich (22) aufweist, der ausgelegt ist, um das Lagerelement (6) in einer Ebene (E) im Wesentlichen zu umschließen,
wobei das Lagerelement (6) eine quer zur Ebene (E) gerichtete erste Aussparung (62) aufweist, in der das Hülsenelement (4) angeordnet ist, wobei bei das Hülsenelement (4) über das Lagerelement (6) federnd in der Ebene (E) relativ zum Halteelement (2) gelagert ist,
wobei das Halteelement (2) einen zweiten Eingriffsbereich (24) aufweist, in dem ein Fixierelement (8) eingreift, um den ersten Eingriffsbereich (22) kraftschlüssig am Lagerelement (6) festzulegen,
wobei der erste Eingriffsbereich (22) und/oder das Lagerelement (6) eine nicht kreisrunde Form aufweisen, so dass eine Verdrehbewegung des Lagerelements (6) relativ zum Haltelement (2) verhindert ist, und
wobei das Lagerelement (6) einen nasenförmigen Vorsprung (66) aufweist, der sich in Richtung des Übergangsbereiches zwischen erstem und zweiten Eingriffsbereich (22, 24) des Halteelements (2) erstreckt, um das Lagerelement (6) gegen Verdrehung in der Ebene (E) relativ zum Halteelement (2) zu sichern.

2. Lagereinheit nach Anspruch 1,
wobei die erste Aussparung (62) im Lagerelement (6) derart ausgebildet ist, dass die Federkennlinie des Lagerelements (6) richtungsabhängig in der Ebene (E) ist.

3. Lagereinheit nach einem der vorhergehenden Ansprüche,
wobei das Lagerelement (6) zweite Aussparungen und/oder Rücksprünge (64) aufweist, um die Federkennlinie des Lagerelements (6) in der von der ersten Aussparung (62) zur/zum zweiten Aussparung/Rücksprung (64) verlaufenden Richtung flacher als in der quer zu dieser verlaufenden Richtung zu gestalten.

4. Lagereinheit nach einem der vorhergehenden Ansprüche,
wobei das Lagerelement (6) formschlüssig am ersten Eingriffsbereich (22) des Halteelements (2) gegen Verlagerung quer zur Ebene (E), relativ zum Halteelement (2), gesichert ist.

5. Lagereinheit nach einem der vorhergehenden Ansprüche,
wobei das Lagerelement (6) an seiner quer zur Ebene (E) gerichteten Außenfläche eine ballige Form aufweist, die zumindest bereichsweise formschlüssig in einer konkaven Form des ersten Eingriffsbereiches (22) eingreift.

6. Lagereinheit nach Anspruch 5,
wobei der mittlere Radius (R₁) des Lagerelements (6) parallel zur Ebene (E) zum mittleren Krümmungsradius (R₂) der balligen Form des Lagerelements (6) quer zur Ebene (E) in einem Verhältnis von 0,2 bis 2, bevorzugt 0,5 bis 1,7 und besonders bevorzugt von ca. 0,9 steht.

7. Lagereinheit nach einem der vorhergehenden Ansprüche,
wobei das Lagerelement (6) durch die vom ersten Eingriffsbereich (22) übertragene Kraft derart verformt ist, dass der Querschnitt des Lagerelements (6) in der Ebene (E) tropfenförmig ausgebildet ist.

8. Lagereinheit nach einem der vorhergehenden Ansprüche,
wobei der erste Eingriffsbereich (22) durch die vom Fixierelement (8) aufgebrachte und vom zweiten Eingriffsbereich (24) übertragene Kraft elastisch verformt ist, so dass sich der erste Eingriffsbereich (22) bei Lösen des Fixierelements (8) in eine Position zurückstellt, in der das Lagerelement (6) nicht am Halteelement (2) festgelegt ist.

9. Lagereinheit nach einem der Ansprüche 3 bis 8,
wobei die zweiten Aussparungen / Rücksprünge (64) am Lagerelement (6) einer kreisabschnittförmigen Bahn, die parallel zur Ebene (E) und konzentrisch zur ersten Aussparung (62) verläuft, folgen.

## Claims

1. A bearing unit, in particular for axle systems of commercial vehicles, comprising a holding element (2), a sleeve element (4) and a bearing element (6),
wherein the holding element (2) has a first engagement region (22) which is designed in order to substantially enclose the bearing element (6) in one plane (E),
wherein the bearing element (6) has a first recess (62) which is directed transversely with respect to the plane (E) and in which the sleeve element (4) is arranged,
wherein the sleeve element (4) is mounted resiliently in the plane (E) relative to the holding element (2) via the bearing element (6), wherein the holding element (2) has a second engagement region (24), in which a fixing element (8) engages, in order to fix the first engagement region (22) frictionally on the bearing element (6),
wherein the first engagement region (22) and/or the bearing element (6) have/has a non-circular shape so that a rotational movement of the bearing element (6) relative to the holding element (6) is prevented, and wherein the bearing element (6) has a nose-shaped projection (66) extending in the direction of the transitional region between the first and second engagement regions (22, 24) of the holding element (2) in order to secure the bearing element (6) against rotation in the plane (E) relative to the holding element (2).

2. The bearing unit of claim 1,
wherein the first recess (62) in the bearing element (6) is designed such that the spring characteristics of the bearing element (6) is dependent on the direction in the plane (E).

3. The bearing unit of any one of the preceding claims,
wherein the bearing element (6) has second recesses and/or cavities (64) in order to make the spring characteristics of the bearing element (6) in the direction running from the first recess (62) towards the second recess/cavity (64) less steep than in the direction running transversely thereto.

4. The bearing unit of any one of the preceding claims,
wherein the bearing element (6) at the first engagement region (22) of the holding element (2) is positively secured against displacement transverse to the plane (E), relative to the holding element (2).

5. The bearing unit of any one of the preceding claims,
wherein the bearing element (6) at its outer surface directed transversely relative to the plane (E) has a ball-like shape, which at least over a certain area positively engages a concave shape of the first engagement region (22).

6. The bearing unit of claim 5,
wherein the relationship of the mean radius (R₁) of the bearing element (6) parallel to the plane (E) to the mean radius of curvature (R₂) of the ball-like shape of the bearing element (6) transverse to the plane (E) is 0.2 to 2, preferably 0.5 to 1.7, and particularly preferably about 0.9.

7. The bearing unit of any one of the preceding claims,
wherein the force transmitted from the first engagement region (22) deforms the bearing element (6) such that the cross-section of the bearing element (6) is drop-like in the plane (E).

8. The bearing unit of any one of the preceding claims,
wherein the first engagement region (22) is deformed elastically by the force applied by the fixing element (8) and transmitted from the second engagement region (24) so that when the fixing element (8) is released, the first engagement region (22) returns to a position in which the bearing element (6) is not fixed to the holding element (2).

9. The bearing unit of any one of claims 3 to 8,
wherein the second recesses / cavities (64) at the bearing element (6) follow a circle-segment-shaped path running parallel to the plane (E) and concentric to the first recess (62).

## Revendications

1. Unité formant palier, en particulier pour système d'essieu de véhicule utilitaire, comprenant un élément de maintien (2), un élément en douille (4) et un élément de palier (6), dans laquelle l'élément de maintien (2) comporte une première zone d'engagement (22), qui est conçue pour sensiblement entourer l'élément de palier (6) dans un plan (E),
dans laquelle l'élément de palier (6) comprend un premier évidement (62) dirigé perpendiculairement au plan (E), évidement dans lequel est agencé l'élément en douille (4),
dans laquelle l'élément en douille (4) est monté via l'élément de palier (6) avec effet ressort dans le plan (E) par rapport à l'élément de maintien (2),
dans laquelle l'élément de maintien (2) comporte une seconde zone d'engagement (24) dans laquelle s'engage un élément de fixation (8) afin d'immobiliser la première zone d'engagement (22) par coopération de forces sur l'élément de palier (6),
dans laquelle la première zone d'engagement (22) et/ou l'élément de palier (6) présente une forme qui n'est pas circulaire, de sorte qu'un mouvement de rotation de l'élément de palier (6) par rapport à l'élément de maintien (2) est empêché, et
dans laquelle l'élément de palier (6) comporte une saillie en forme d'ergot (66), qui s'étend en direction de la zone de transition entre la première et la seconde zone d'engagement (22, 24) de l'élément de maintien (2), afin de bloquer l'élément de palier (2) à l'encontre d'une rotation dans le plan (E) par rapport à l'élément de maintien (2).

2. Unité formant palier selon la revendication 1,
dans laquelle le premier évidement (62) dans l'élément de palier (6) est réalisé de telle façon que la courbe caractéristique d'élasticité de l'élément de palier (6) est indépendante de la direction dans le plan (E).

3. Unité formant palier selon l'une des revendications précédentes,
dans laquelle l'élément formant palier (6) comporte des seconds évidements et/ou ressauts (64), afin de concevoir la courbe caractéristique d'élasticité de l'élément de palier (6) dans la direction s'étendant depuis le premier évidement (62) vers le second évidement/ressauts (64) plus plate que dans la direction perpendiculaire à celle-ci.

4. Unité formant palier selon l'une des revendications précédentes,
dans laquelle l'élément de palier (6) est bloqué par coopération de formes sur la première zone d'engagement (22) de l'élément de maintien (2) à l'encontre d'un déplacement perpendiculairement au plan (E) par rapport à l'élément de maintien (2).

5. Unité formant palier selon l'une des revendications précédentes,
dans laquelle l'élément de palier (6) présente, au niveau de sa surface extérieure dirigée perpendiculairement au plan (E), une forme en tonneau, qui s'engage au moins localement par coopération de formes dans une forme concave de la première zone d'engagement (22).

6. Unité formant palier selon la revendication 5,
dans laquelle le rayon moyen (R₁) de l'élément de palier (6) parallèlement au plan (E) présente, vis-à-vis du rayon de courbure moyen (R₂) de la forme en tonneau de l'élément de palier (6) perpendiculairement au plan (E), un rapport de 0,2 à 2, de préférence de 0,5 à 1,7, et de façon particulièrement préférée d'environ 0,9.

7. Unité formant palier selon l'une des revendications précédentes, dans laquelle l'élément de palier (6) est déformé par la forme transmise depuis la première zone d'engagement (22) de telle façon que la section transversale de l'élément de palier (6) dans le plan (E) est conçue en forme de goutte.

8. Unité formant palier selon l'une des revendications précédentes,
dans laquelle la première zone d'engagement (22) est déformée élastiquement par la force appliquée par l'élément de fixation (8) et transmise depuis la seconde zone d'engagement (24), de sorte que la première zone d'engagement (22) recule, lors de la libération de l'élément de fixation (8), jusque dans une position dans laquelle l'élément de palier (6) n'est pas immobilisé sur l'élément de maintien (2).

9. Unité formant palier selon l'une des revendications 3 à 8,
dans laquelle les seconds évidements/ressauts (64) sur l'élément de palier (6) suivent une trajectoire en forme de secteur circulaire, qui s'étend parallèlement au plan (E) et concentriquement au premier évidement (62).
